# FASCICULE DE BREVET EUROPEEN

(11) **EP 0 628 445 B1**
(45) Date de publication et mention de la délivrance du brevet: **12.11.1997**
(21) Numéro de dépôt: 94401026.3
(22) Date de dépôt: 09.05.1994
(51) Int. Cl.: B60N 2/04, B60N 2/20, B60N 2/34, B60N 2/36

(54) **Siège à positions multiples pour véhicules automobiles**
Mehrfachsitz für Kraftfahrzeuge
Multiple position seat for motor vehicles

(30) Priorité: 19.05.1993 FR 9306061; 06.04.1994 FR 9404042
(43) Date de publication de la demande: 14.12.1994
(73) Titulaire: CESA COMPAGNIE EUROPEENNE DE SIEGES POUR AUTOMOBILES, 92307 Levallois-Perret Cédex (FR)
(72) Inventeur: Anglade, Gérard, F-45700 Pannes (FR); Amorim, David, F-45200 Amilly (FR); Derias, Bruno, F-45200 Montargis (FR)
(74) Mandataire: Polus, Camille

(56) Documents cités:
- EP-A- 0 228 923
- EP-A- 0 239 502
- DE-A- 1 455 468
- FR-A- 2 217 921
- FR-A- 2 318 759
- GB-A- 2 099 691
- US-A- 3 311 405
- US-A- 3 727 976
- US-A- 3 973 799

## Description

La présente invention concerne les sièges et, notamment, les sièges pour véhicules automobiles terrestres aptes à occuper plusieurs positions de réglage de préférence prédéterminées.

La tendance contemporaine des constructeurs d'automobiles est de concevoir des véhicules dits "monospace" ou "un volume" ou encore "monocorps" qui tiennent à la fois de la conduite intérieure dite break et du véhicule utilitaire dit fourgonnette. Etant donné l'universalité d'utilisation visée par ces véhicules, il est nécessaire de les équiper de sièges aptes à prendre des positions multiples et variées, de préférence prédéterminées, c'est-à-dire aptes à prendre un certain nombre de positions discrètes et, chacune, bien définies. Des sièges de ce type doivent par exemple pouvoir se déployer complètement en couchette s'il y a lieu, en fauteuil détente ou relax, en siège normal dit de conduite ou de route, et doivent pouvoir aussi se rétracter pour se rabattre partiellement en tablette ou se replier totalement d'une manière compacte et relativement peu encombrante en vue de leur escamotage dans le véhicule pour y libérer du volume ou de leur enlèvement de ce dernier.

De tels sièges doivent aussi satisfaire à des normes de sécurité édictées par des organismes professionnels ou les Pouvoirs Publics de manière que l'occupant d'un siège soit retenu efficacement sur celui-ci par une ceinture de sécurité en cas de chocs violents, notamment à grande composante longitudinale, repérée par rapport au véhicule.

Cette dernière contrainte devient particulièrement difficile à satisfaire lorsque comme cela devient à être de plus en plus courant, une telle ceinture de sécurité n'est plus directement ancrée en deux ou trois points de la structure ou coque du véhicule, la ceinture de sécurité étant en quelque sorte indépendante du siège, mais au contraire cette ceinture de sécurité fait corps avec le siège et est en quelque sorte "embarquée" sur celui-ci, les différents points d'ancrage de la ceinture de sécurité étant établis et amarrés directement sur le siège lui-même. Dans une telle situation où la ceinture de sécurité est embarquée, en cas de chocs violents, les efforts à absorber et/ou à transmettre se trouvent donc essentiellement localisés dans la zone de l'axe d'inclinaison relative du dossier et de l'assise du siège, d'une part, et dans la zone du piètement reliant habituellement le siège au sol ou plancher du véhicule, d'autre part.

On saisit toute la difficulté qu'il y a à satisfaire à l'ensemble de ces prescriptions, souvent contradictoires, en particulier lorsqu'on se souvient qu'un tel siège doit être produit en grande série et au moindre coût.

Des sièges de ce type ont déjà été proposés. Des solutions sont par exemple exposées notamment dans les documents FR-A-2 687 621 (N.^{o} d'enregistrement national français 92-02 172), FR-A-2 689 739 (N.^{o} 92 04 448), FR-A-2 692 121 (N.^{o} 92 06 997) et FR-A-2 699 973 (N.^{o} 92 15 857) déposés par la Demanderesse auxquels on pourra se reporter utilement. Si ces solutions donnent satisfaction, elles ne conviennent pas à tous les cas.

L'invention a pour but de construire un siège multifonctionnel d'usage général qui soit utilisable en particulier à bord de véhicules automobiles terrestres du type dit "monospace" et qui soit confortable et qui aussi satisfasse aux normes de sécurité.

L'invention concerne un siège à dossier inclinable dont les déplacements entraînent des déplacements concomitants de l'assise selon deux modes de fonctionnement différents, un premier mode selon lequel lorsque le dossier est déplacé dans un sens, à partir de sa position dite normale, il fait reculer très peu la partie arrière de l'assise fixe tout en faisant s'abaisser sa partie avant de manière à la rétracter et à la laisser dans cette position que l'on peut qualifier de fixe et un second mode selon lequel lorsque le dossier est déplacé dans le sens opposé, à partir de cette position normale, il entraîne l'assise de manière concomitante en l'avançant et la soulevant.

EP-A-0 228 923 décrit un siège, notamment pour véhicule, du type à positions multiples avec au moins une position normale qui sépare des première et seconde positions extrêmes, le siège comprenant une assise avec une armature mobile pour un coussin, un dossier avec une armature mobile pour un coussin, un piétement destiné à faire reposer le siège sur un plancher, une articulation permettant de changer les positions relatives de ces coussins d'assise et de dossier ainsi qu'une timonerie pour asservir les déplacements relatifs de ces coussins d'assise et de dossier lors du changement de leurs positions relatives.

L'invention a pour objet un siège du type précité, caractérisé en ce que la timonerie comprend, d'une part, une bielle reliant de manière articulée l'une des extrémités de l'armature d'assise au piétement et, d'autre part, un embiellage reliant de manière articulée l'autre des extrémités de l'armature d'assise à l'armature de dossier, l'embiellage comprenant une came, reliée au piétement, coopérant avec une contre-came reliée à l'armature de dossier au moins pendant une partie de la course de ce dossier entre les positions extrêmes du siège, la came comprenant une rampe avec deux tronçons distincts successifs l'un procurant un premier mode de fonctionnement et l'autre de ces tronçons procurant un second mode de fonctionnement, de manière que, dans un premier mode de fonctionnement, lorsque le dossier passe de sa position normale à la première position extrême l'assise conserve une position au moins localement pratiquement fixe pour que son coussin soit en vis-à-vis du coussin de dossier et que, dans un second mode de fonctionnement, lorsque le dossier passe de sa position normale à la seconde position extrême l'assise change de position pour que son coussin vienne pratiquement en alignement avec le coussin de dossier et, inversement. L'invention a aussi pour objet une application d'un siège du type précédent à un véhicule automobile terrestre en particulier à moteur du genre par exemple "monospace".

D'autres caractéristiques de l'invention ressortiront de la lecture de la description et des revendications qui suivent ainsi que de l'examen du dessin annexé, donné seulement à titre d'exemple, où :
- la Figure 1 est une vue perspective partielle schématique d'un mode de réalisation d'un siège selon l'invention :
- la Figure 2 est une vue partielle en élévation latérale du mode de réalisation du siège de la Figure 1 représenté en position dite normale;
- la Figure 3 est une vue analogue à celle de la Figure 2 en position extrême dite couchette;
- la Figure 4 est une vue analogue à celle de la Figure 2 où le siège est illustré en position extrême dite rabattue;
- la Figure 5 est une vue perspective partielle schématique d'un autre mode de réalisation d'un siège selon l'invention; et

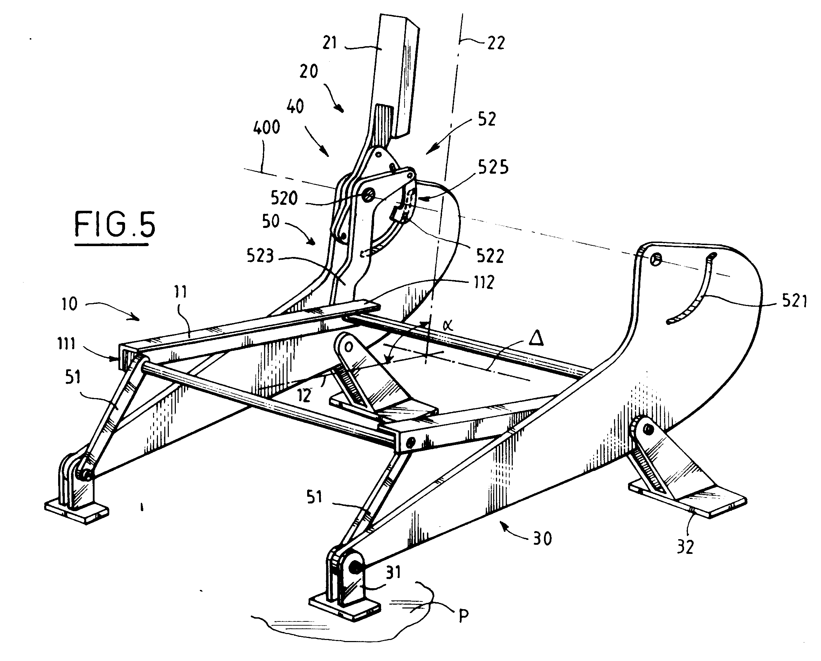

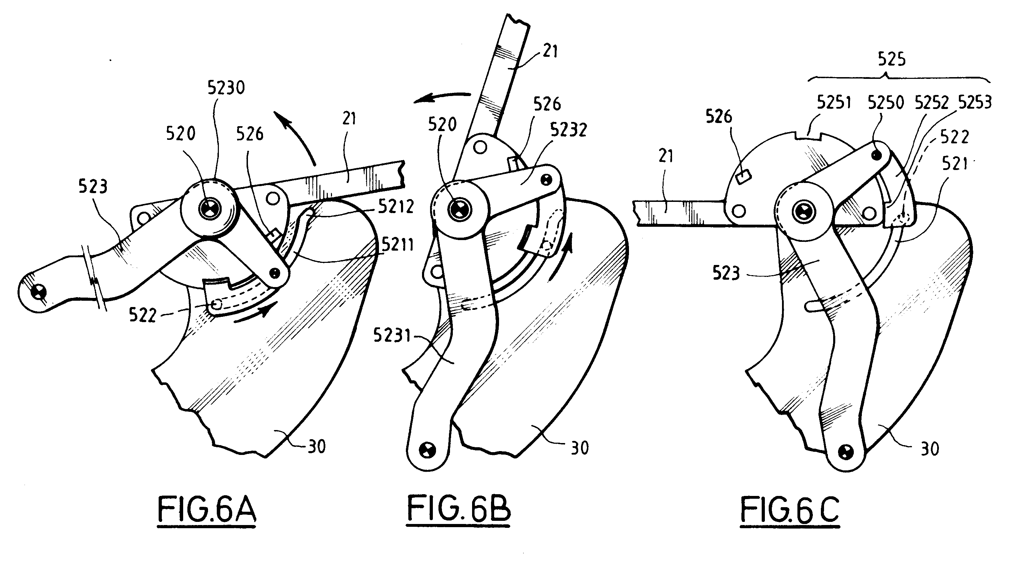

- les Figures 6A, 6B et 6C sont des vues de côté partielles schématiques du mode de réalisation de la Figure 5 illustrant ce dernier dans diverses positions qu'il prend au cours de son fonctionnement, la vue 6A correspondant au second mode de fonctionnement lorsque le siège passe de sa position extrême dite "couchette" à sa position normale, la vue 6B correspondant au premier mode de fonctionnement lorsque le siège passe de sa position normale à son autre position extrême dite "tablette" ou "compacte ou "rabattue" et la vue 6C correspondant à cette position "tablette" ou "compacte" ou "rabattue".

Les sièges articulés ou à positions multiples et tout spécialement ceux d'entre eux destinés à des véhicules, par exemple automobiles terrestres, étant bien connus dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'un siège perfectionné selon l'invention avant d'en décrire la fabrication au besoin, et l'assemblage et le fonctionnement.

Dans ce qui suit, on décrit un siège selon l'invention dans son application particulière à un véhicule automobile terrestre, mais il est clair qu'un tel siège n'a pas ses applications limitées à celle-ci.

Dans ce qui suit, toutes les indications relatives à l'orientation du siège telles que avant, arrière, haut, bas, droite, gauche, latérale, sont faites par rapport aux axes de référence traditionnels d'un véhicule et sont repérées par rapport à la position où un siège suivant l'invention occupe sa position dite normale telle que lorsqu'il est occupé, celui qui y est assis est dirigé dans l'axe de la route face au pare-brise du véhicule.

Un tel siège étant, le plus souvent, symétrique par rapport à un plan médian parallèle à un plan passant par l'axe longitudinal du véhicule, il suffira d'en décrire et/ou illustrer l'un des côtés, le côté droit ou le côté gauche. Il est clair toutefois que cette symétrie n'est pas absolument nécessaire et que certains des constituants du siège selon l'invention peuvent n'être situés que d'un seul côté.

Comme on le voit, d'une manière classique, un siège selon l'invention est destiné à reposer sur un sol ou un plancher P de préférence d'un véhicule automobile terrestre.

Un tel siège comprend, essentiellement, une assise 10, un dossier 20, un piétement 30, une articulation 40 et une timonerie 50.

L'assise 10 comprend une armature 11 mobile avec une extrémité 111 avant et une extrémité 112 arrière. Cette armature de tout type classique approprié, faite par exemple à partir de tubes et de cornières mis en forme et mécano-soudés, est destinée à porter un coussin 12 de tout type classique approprié. Ce coussin est représenté symboliquement par sa trace sur un plan vertical médian.

Le dossier 20 comprend une armature 21 mobile destinée à recevoir un coussin 22. Ce qui a été précédemment indiqué à propos de l'armature et du coussin de l'assise vaut ici à propos de l'armature et du coussin du dossier.

Le piétement 30 destiné à faire reposer le siège sur le sol ou plancher P, comprend, par exemple, un pied 31 avant et un pied 32 arrière. S'il y a lieu, ces pieds sont articulés comme illustré, et sont pourvus de dispositifs d'ancrage appropriés qui permettent d'amarrer le siège au plancher d'une manière amovible comme il est connu. S'il y a lieu, les pieds avant en particulier sont munis de gonds ou charnières ou similaires de manière à pouvoir faire basculer en particulier vers l'avant l'ensemble du siège relativement au plancher. Ceci est classique et on ne s'y étendra pas davantage.

L'articulation 40 définit un axe 400 qui permet de changer l'orientation du coussin du dossier relativement au coussin de l'assise. Cette articulation de tout type approprié classique est d'un seul tenant avec les armatures d'assise et de dossier ou bien comprend des flasques qui sont fixés à ces armatures. Une telle articulation permet de définir diverses positions discrètes bien définies et s'il y a lieu de verrouiller le siège dans chacune de ces positions. S'il y a lieu, pour au moins certaines de ces positions telle la position normale ou route ou bien la position détente ou relax, l'articulation permet aussi un changement d'orientation par rapport à l'une au moins de ces positions nominales, d'une manière continue ou discontinue. Tout ceci est classique en particulier dans l'industrie automobile, c'est pourquoi on ne s'y étendra pas davantage. On pourra par exemple se reporter utilement au document FR-A-2 687 621.

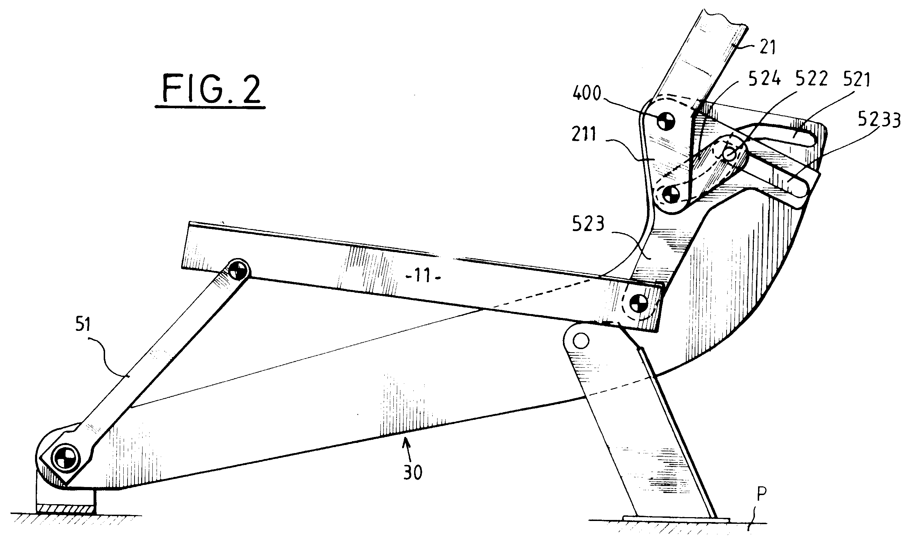

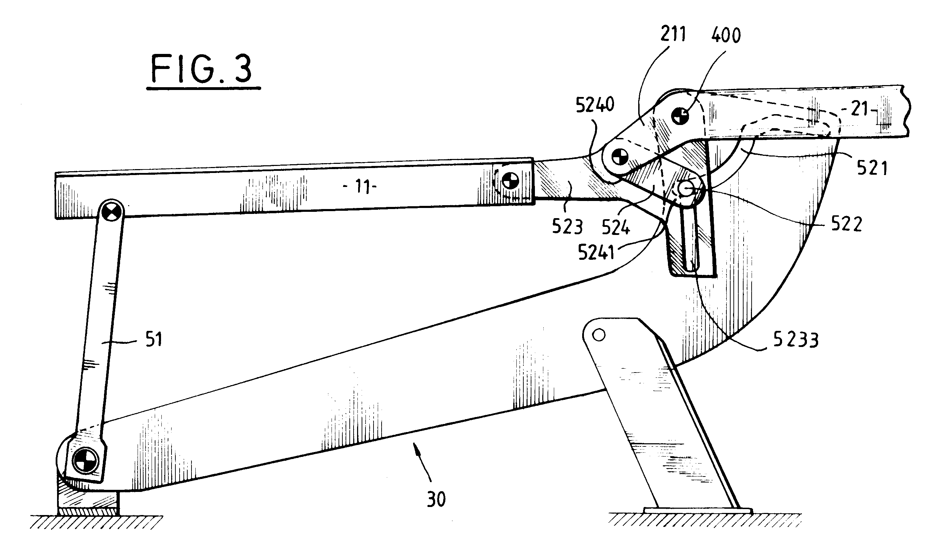

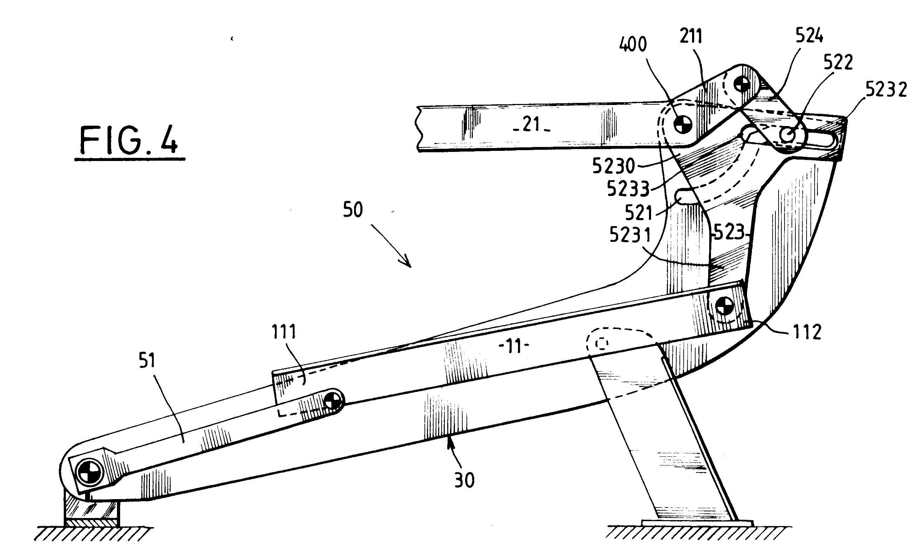

La timonerie 50 comprend, essentiellement, d'une part, une bielle 51 reliant de manière articulée l'une 111 des extrémités de l'armature 11 d'assise au piétement 30 et, d'autre part, un embiellage 52 reliant de manière articulée l'autre 112 des extrémités de l'armature 11 d'assise à l'armature 21 de dossier. Cette timonerie est telle, que dans un premier mode de fonctionnement, lorsque le dossier 20 passe en basculant dans un sens de sa position normale (Figure 2 ou 6B) à l'une de ses positions extrêmes par exemple sa position rabattue (Figure 4 ou 6C), l'assise 10 conserve une position pratiquement fixe définie précédemment pour que son coussin 12 soit en vis-à-vis du coussin 21 de dossier et que, dans un second mode de fonctionnement, lorsque le dossier 20 passe en basculant dans le sens opposé de sa position normale (Figure 2 ou 6B) à l'autre de ses positions extrêmes par exemple sa position couchette (Figure 3 ou 6A) l'assise 10 change de position pour que son coussin 11 vienne pratiquement en alignement avec le coussin 21 de dossier, et inversement.

L'embiellage 52 comprend une came 521 coopérant avec une contre-came 522 et un bras de commande 523. S'il y a lieu l'embiellage 52 comprend une biellette 524 ou un verrou 525 et une butée 526.

L'une de ces came et contre-came est associée au piétement ou dossier, et l'autre de celles-ci est associée au dossier ou piétement. Dans le mode de réalisation illustré, la came 521 est associée directement ou indirectement au piètement 30 et la contre-came 522 est associée directement ou indirectement au dossier 20. La solution inverse peut être retenue.

La came 521 se présente par exemple à la manière d'une rampe, par exemple en fente ou lumière qui présente deux tronçons 5211 et 5212 distincts successifs, entre lesquels s'il a y lieu se situe une zone 5213 de transition. L'un de ces tronçons procure le premier mode de fonctionnement et l'autre de ceux-ci procure le second mode de fonctionnement.

L'un de ces tronçons, dans ce cas le tronçon 5211, est par exemple rectiligne alors que l'autre de ces tronçons, dans ce cas le tronçon 5212, est par exemple curviligne. La zone de transition 5213 facilite le passage de l'un à l'autre de ces tronçons et donc le passage de l'un à l'autre des deux modes de fonctionnement.

La came 521 est taillée directement dans le piétement, comme illustré ou bien dans une plaque ou similaire rapportée sur et fixée au piétement de toute manière appropriée par exemple soudage, rivetage, vissage, etc.

La contre-came 522 se présente par exemple à la manière d'un pion, tige, cheville ou similaire sur lequel on reviendra plus en détail par la suite, et est destinée à coopérer notamment avec la came 521.

Comme on peut l'observer pour le mode de réalisation des Figures 5 et 6, la contre-came 522 qui se présente à la manière d'un pion ou similaire, est sertie sur le pêne de préférence au voisinage de la dent comme illustré.

Comme on peut l'observer pour l'un des modes de réalisation, la contre-came 522 est simultanément en prise avec la came 521 et avec le profil 5233. La contre-came 522 se présente à la manière d'un pion ou similaire par exemple serti sur la biellette 524 avec par exemple une partie munie d'une douille à section droite extérieure carrée engagée dans la lumière 5233 du bras de commande 523 et avec par exemple une partie munie d'une douille à section droite extérieure circulaire engagée dans la fente en rampe de la came 521 pour diminuer les frottements.

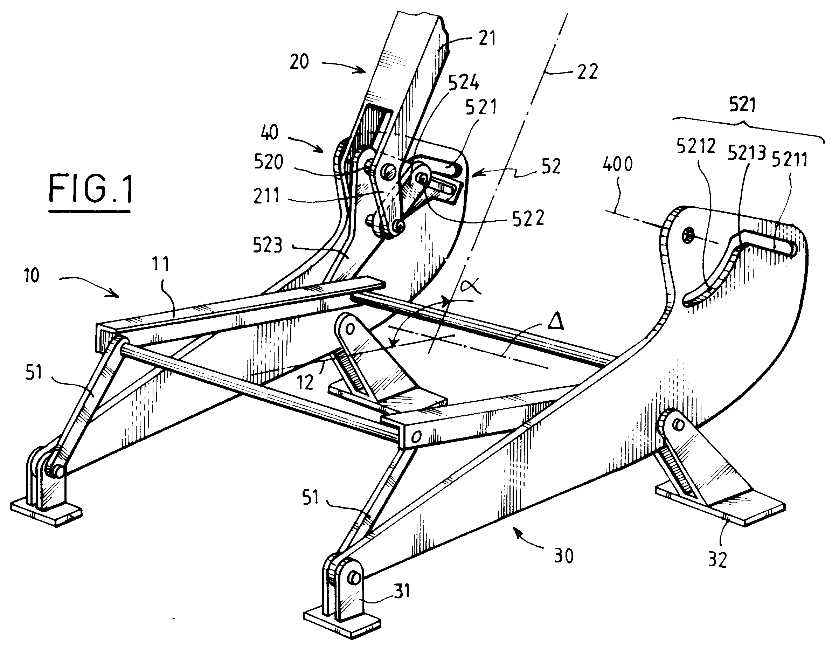

Le bras de commande 523 est monté basculant sur un axe 520 et est monté articulé sur l'armature 11 d'assise. Le bras de commande 523 se présente par exemple sous la forme générale d'une équerre avec un sommet 5230 qui est articulé sur l'axe 520 et avec une branche 5231 qui est articulée à proximité de l'extré mité arrière 112 de l'armature d'assise, et avec une branche 5232. Ce bras de commande pour le mode de réalisation des Figures 1 à 4 porte un profil 5233 au moins partiellement superposable à la came, qui est par exemple sous la forme d'une lumière linéaire et qui est situé sur la branche 5232.

On observera que pour les deux modes de réalisation illustrés, l'axe 400 de pivotement du dossier est pratiquement confondu avec l'axe 520 de basculement du bras de commande. Toutefois, on notera que cette coïncidence de ces deux axes est facultative.

On observera que pour le mode de réalisation des Figures 1 à 4, le tronçon rectiligne 5211 de la came 521 de même que le profil linéaire 5233 du bras de commande 523 sont radiaux et passent par exemple par l'axe 520, alors que le tronçon curviligne 5212 de la came 521 est un arc de cercle centré sur l'axe 520.

On observera que pour le mode de réalisation des Figures 5 et 6, le premier tronçon 5211 est un arc de cercle centré sur l'axe 520 de basculement du bras de commande 523 pour les raisons que l'on comprendra par la suite.

La biellette 524 comprend un bout 5240 qui est articulé sur un prolongement 211 de l'armature 21 du dossier 20, et un bout 5241 qui porte la contre-came 522. Le verrou 525 est fait d'une gâche 5251 et d'un pêne 5252. Dans ce mode de réalisation, la gâche 5251 est associée à l'armature 21 de dossier et le pêne 5252 est monté pivotant sur la branche 5232 du bras de commande et porte la contre-came 522. La gâche 5251 se présente sous la forme d'une encoche ou cran ou similaire et le pêne se présente à la manière d'un loquet dont un bout porte un pivot 5250 de tout type approprié fixé sur la branche 5232 du bras de commande 523. L'autre bout du loquet porte une dent 5253 ou similaire destinée à coopérer avec le cran ou encoche de la gâche.

Comme on le voit, la gâche du verrou 525 est ménagée dans une plaque ou similaire en secteur de cercle qui fait corps ou qui est fixée à l'armature 21 du dossier 20 de toute manière appropriée par exemple soudage, rivetage, vissage, etc. Ce secteur de cercle est centré sur l'axe 520 et sa périphérie porte l'encoche ou cran de la gâche.

La butée 526 est disposée sur la trajectoire du bras de commande 523 et en particulier de sa branche 5232 de manière à agir sur elle lorsqu'on bascule le dossier de l'une de ses positions extrêmes à l'autre comme on le comprendra par la suite. Cette butée de tout type approprié est par exemple portée par la plaque en secteur de cercle.

Tous les constituants d'un siège selon l'invention sont confectionnés à partir de matériaux métalliques ou synthétiques mis en forme par des techniques traditionnelles appropriées. Tous ces constituants sont réunis, assemblés et montés comme cela ressort clairement des figures du dessin.

On observera que les articulations nécessaires au fonctionnement d'un siège selon l'invention sont illustrées sur les figures du dessin sous la forme d'un damier circulaire pour la commodité de l'illustration. Ces articulations sont faites de toutes manières appropriées par exemple à l'aide de paliers à billes ou lisses faits de portées et de chevilles, boulons, rivets, etc, comme il est classique.

On exposera maintenant le fonctionnement du premier mode de réalisation illustré sur les Figures 1 à 4 d'un siège selon l'invention.

Dans les modes de réalisation illustrés on observera que le coussin 12 d'assise et le coussin 22 de dossier, représentés schématiquement par leurs traces, se coupent, au moins virtuellement, selon l'arête Δ d'un dièdre d'angle α. Cet angle α varie de l'ordre de 20° lorsque le siège selon l'invention passe de sa position normale à sa position détente, et inversement.

La variation de l'angle α est obtenue par exemple à l'aide d'un vérin hydraulique de blocage de tout type approprié classique, non illustré, qui est interposé par exemple entre l'arrière du pied avant et le haut du dossier. Ce vérin, qui est de préférence unique et situé sur l'un des côtés du siège, permet de faire varier l'inclinaison du dossier et aussi de bloquer le dossier dans la position choisie tout en résistant au besoin aux efforts dus à la présence de l'ancrage supérieur d'épaule d'une ceinture de sécurité du type dit embarqué. On notera que cette résistance aux efforts ou sollicitations exceptionnels est surtout nécessaire pour les positions normale et détente.

On suppose qu'initialement le siège occupe sa position normale ou route, comme illustré sur les Figures 1 et 2.

On déverrouille l'articulation ou le vérin de blocage à l'aide de sa commande, comme il est classique, puis on incline le dossier vers l'arrière, en le faisant tourner dans le sens horaire en regardant les figures du dessin, en position couchette illustrée sur la Figure 3. En basculant, le dossier entraîne la biellette qui, elle-même, entraîne la contre-came et lui fait parcourir vers la gauche la partie courbe en arc de cercle de la rampe de la came. On observera qu'au cours de ce déplacement, la position relative des axes 400-520, et de l'articulation reliant le prolongement du dossier à la biellette, ainsi que de la contre-came 522, ne change pas. Tout se passe donc comme si la contre-came faisait partie intégrante du prolongement du dossier. La contre-came 522 entraîne dans son déplacement le bras de commande 523 en prenant appui sur l'un des flancs de la lumière 5233. On observera que tout se passe alors comme si le bras de commande faisait corps avec le prolongement du dossier. Le bras de commande bascule donc d'un angle identique à celui du basculement du dossier. et provoque un déplacement concomitant de l'assise. L'assise se soulève tout en s'inclinant un peu vers l'arrière en passant de la position normale route à la position détente ou relax. Cette petite inclinaison est due à l'action de la bielle.

On observera que lorsque le siège selon l'invention occupe sa position détente, la configuration qu'il prend est favorable au confort et à la sécurité. En effet, cette conformation "allonge" la surface d'assise offerte lorsque le dossier est plus incliné qu'il n'est lorsqu'il est dans sa position normale et assure, ainsi, un meilleur soutien des cuisses. La partie avant de l'assise remonte un peu, ce qui améliore le confort de posture et aussi la sécurité en évitant tout risque de glissement de l'occupant entre la ceinture de sécurité et le siège par un effet dit de "sous-marinage".

On observera que lorsqu'on fait passer le dossier de la position détente à la position couchette, le coussin de l'assise est totalement avancé et surélevé pour venir pratiquement en alignement, quasi-horizontale, avec le coussin du dossier, ce qui améliore le confort en supprimant, pratiquement totalement, tout ressaut entre les coussins.

On exposera maintenant le fonctionnement lorsqu'on incline le dossier dans le sens opposé, anti-horaire, pour le faire passer de sa position normale à sa position rabattue vers l'avant, par exemple en tablette. Pendant une petite partie de sa course, la contre-came, comme illustré sur la Figure 4, reste encore dans le tronçon courbe de la came et demeure toujours prisonnier du profil de la lumière. Le bras de commande tourne donc de quelques degrés et fait un tout petit peu reculer l'assise dont la hauteur de la partie arrière ne varie pratiquement pas. En continuant sa course, le dossier fait que la biellette pousse la contre-came dans la zone de transition puis dans le tronçon radial de la rampe. La contre-came entraine alors dans sa course le profil en lumière si bien que la partie radiale du tronçon de la came et le profil de la lumière se trouvent superposés au moins partiellement. La poursuite du basculement du dossier pousse la contre-came dans ces parties superposées. L'angle formé par la biellette et le prolongement du dossier varie.

On observera que la contre-came assure un interverrouillage du bras de commande et du piétement quelle que soit sa position dans les parties radiales de la came et du profil. Tout se passe comme si le bras de commande était alors fixe et rendu solidaire du piétement. Le dossier peut poursuivre librement son rabattement vers l'avant, la biellette le suit.

On observera que l'assise conserve une position au moins localement pratiquement fixe. Dans ce cas, l'extrémité arrière se déplace peu et conserve une distance pratiquement constante au-dessus du plancher, alors que son extrémité avant "plonge" quelque peu en se rapprochant du plancher. L'importance d'un tel "plongeon" est fonction des dimensions de la bielle et de la localisation de ses articulations et peut être réduite à une valeur pratiquement nulle par un choix judicieux des paramètres appropriés.

On observera que lorsque le dossier est ainsi rabattu vers l'avant l'assise occupe sa position la plus rétractée qui donne au siège une grande compacité sans qu'il y ait d'interférences notables entre les matelassurres des coussins d'assise et de dossier. On peut alors utiliser la surface postérieure du dossier par exemple comme tablette ou similaire ou refermer encore davantage le siège avant de le replier pour portefeuille" et/ou de le basculer vers l'avant pour l'extraire du véhicule s'il y a lieu.

On comprend donc que grâce au siège selon l'invention on obtient un déplacement continu du dossier et des constituants toujours en prises, qui assurent soit la solidarisation du bras de commande avec le dossier (inclinaison du dossier vers l'arrière soit la solidarisation du bras de commande avec le piètement (rabattement du dossier vers l'avant). Avec un siège selon l'invention, on observe que le bras de commande est soit mobile avec le dossier, soit fixe par rapport au piétement. On notera encore que les déplacements de l'assise sont dirigés par le bras de commande et que ceux-ci sont liés cinématiquement à ceux du dossier, ou bien l'assise reste immobile.

On observera que dans son premier mode de fonctionnement, lorsque le siège passe de sa position normale à sa position rabattue, le bras de commande et le dossier sont libres alors que le bras de commande et le piétement sont verrouillés l'un à l'autre, alors que dans son deuxième mode de fonctionnement lorsque le siège passe de sa position normale à sa position couchette le bras de commande et le dossier sont verrouillés l'un à l'autre alors que le bras de commande et le piétement sont libres.

Pour la commodité de l'exposé et la simplification de la réalisation, on a fait en sorte que l'axe 400 de l'articulation et l'axe 520 de basculement du bras de commande sont géométriquement confondus ou pratiquement tels. Il est clair qu'ils peuvent être distincts et ne pas être confondus.

Il en est de même de l'articulation de la bielle sur le piétement qui peut ne pas être confondu avec l'articulation du pied avant.

Le tronçon curviligne de la came peut ne pas être centré sur l'axe de l'articulation du dossier sur le piétement. Dans un tel cas, il se produit un petit déplacement du bras de commande par rapport au dossier pendant l'inclinaison de ce dernier vers l'arrière. Un tel résultat n'est pas nécessairement néfaste et peut être même recherché.

Comme cela apparaît de ce qui précède la came et le profil sont au moins partiellement superposables. Si tel n'est pas le cas, il se produit un petit déplacement de l'assise pendant le rabattement du dossier vers l'avant. Ceci n'est pas nécessairement nuisible et peut même être recherché. De même, la position relative et la forme de la came et du profil peuvent être différentes de celles décrites. C'est en particulier le cas du tronçon rectiligne et du profil linéaire décrits comme radiaux; l'essentiel est qu'ils soient superposables au moins localement de manière à ce que la contre-came réalise leur interverrouillage quelle que soit la position relativement à ces came et profil dans leurs parties superposables, en particulier celles non droites et non radiales. Il est toutefois important que leurs orientations soient correctes pour que la contre-came assure cet interverrouillage et aussi l'entraînement du bras de commande lorsqu'il quitte les parties superposables.

On exposera maintenant le fonctionnemnt du second mode de réalisation illustré sur les Figures 5 et 6 d'un siège selon l'invention.

On suppose qu'initialement le siège occupe la position extrême où il est illustré sur la Figure 6A qui est celle où le siège est en position dite couchette. On observera que l'armature du dossier est en position approximativement horizontale et que l'extrémité arrière de l'armature d'assise qui est articulée sur la branche du bras de commande est relevée. On observera aussi que le pêne est enclenché dans la gâche du verrou et que la contre-came est à l'extrémité du tronçon en arc de cercle de la came dans lequel elle est engagée.

Si à partir de cette position on relève le dossier, on voit que le bras de commande bascule avec lui en tournant dans le sens anti-horaire. Le bras de commande entraîne l'extrémité opposée arrière de l'assise vers le bas tout en la faisant reculer. Cette rotation simultanée se produit jusqu'à ce que la contre-came arrive à l'extrémité opposée du tronçon en arc de cercle de la came. Lorsque la contre-came s'engage dans l'autre tronçon de la came, le pêne se dégage de la gâche et reste désengagé jusqu'à ce qu'il se bloque tout en étant dégagé lorsque la contre-came arrive à l'autre extrémité du tronçon de la came et s'y arrête. Le pêne étant articulé sur la branche du bras de commande, ce dernier se trouve immobilisé dans la position où il est illustré sur la Figure 6C alors que le dossier est, lui, maintenant désolidarisé du bras de commande et donc de l'assise. Le dossier peut donc poursuivre sa rotation dans le sens opposé à celui des aiguilles d'une montre, pour gagner une position où son coussin se trouve en vis-à-vis du coussin de l'assise, en position rabattue, compacte ou en tablette.

Pour effectuer un déploiement du siège, il suffit de faire basculer le dossier dans le sens horaire à partir de la situation illustrée sur la Figure 6C. Lorsque la butée rencontre la branche du bras de commande sur' laquelle est articulé le pêne, le dossier entraîne avec lui le bras de commande et le verrou se trouve simultanément automatiquement réenclenché lorsque la gâche est située de nouveau à l'aplomb du pêne qui s'y engage, entraîné par l'action de la contre-came qui suit la came.

On observera que l'assise conserve une position au moins localement pratiquement fixe, dans ce cas l'extrémité arrière se déplace peu (Figures 6B et 6C) et conserve une distance pratiquement constante au-dessus du plancher alors que son extrémité avant "plonge" quelque peu en se rapprochant du plancher. L'importance d'un tel "plongeon" est fonction des dimensions de la bielle et de la localisation de ses articulations, et peut être réduite à une valeur pratiquement nulle par un choix judicieux des paramètres appropriés.

On observera que lorsque le dossier est ainsi rabattu vers l'avant (Figure 6C), l'assise occupe sa position le plus rétractée qui donne au siège une grande compacité sans qu'il y ait d'interférences notables entre les matelassures des coussins d'assise et de dossier. On peut alors utiliser la surface postérieure du dossier par exemple comme tablette ou similaire, ou bien refermer encore davantage le siège avant de le replier en "portefeuille" et/ou de le basculer vers l'avant pour l'extraire du véhicule s'il y a lieu.

Dans ce qui précède, on a supposé que les constituants d'un siège selon l'invention étaient situés au moins du côté du siège qui porte l'ancrage d'une ceinture de sécurité embarquée. Il est clair qu'on peut utiliser un montage symétrique disposé sur l'autre côté. On observera toutefois que la cinématique selon l'invention n'est indispensable que d'un seul côté pourvu que l'assise soit bien maintenue et décrive une trajectoire correcte. Pour parvenir à ceci, on utilise une bielle qui joue le rôle d'un palonnier double ou similaire qui transmet le déplacement d'une partie latérale avant de l'assise à la partie opposée située de l'autre côté. De la sorte, l'assise est maintenue rigide en trois points et il suffit de relier de manière articulée un quatrième point de celle-ci, dans ce cas la partie arrière latérale de l'assise qui est opposée à celle articulée au bras de commande, à une barre de soutien ou similaire qui est articulée au piètement par exemple sur l'axe 400 ou à proximité de celui-ci de manière à être en quelque sorte "suspendue". L'assise maintenue ainsi en quatre endroits ne risque pas de se déformer ou de se gauchir sous le poids de son occupant.

On observera aussi qu'un siège perfectionné selon l'invention fonctionne sans moyens de rappel élastique du dossier en position normale ou route. En effet, le poids de l'occupant à lui seul, lorsqu'il repose sur l'assise, suffit à exercer un effort sur le bras de commande qui relève le dossier.

On observera que l'invention du fait du petit nombre de constituants qu'elle met en oeuvre, est relativement simple à fabriquer avec des tolérances "serrées" qui réduisent les jeux et donc les bruits de fonctionnement. De même l'invention contribue à améliorer la résistance mécanique et donc la sécurité car les efforts sont transmis par le verrou sans pratiquement mettre à contribution came et contre-came, en cas de choc frontal qui ferait notamment "sous-mariner" l'occupant du siège. Cette résistance mécanique peut encore être confortée en donnant à la gâche et au pêne du verrou des formes "engageantes" qui favorisent un interverrouillage croissant avec les efforts mis en jeu, sans pratiquement mettre à contribution came et contre-came qui n'interviendraient de manière ultime que si gâche et pêne se désolidarisaient.

Ce qui précède met bien en lumière les particularités distinctives de l'invention et fait ressortir les avantages qu'elle apporte et permet de percevoir tout l'intérêt qu'elle offre.

## Revendications

1. Siège, notamment pour véhicule, du type à positions multiples avec au moins une position normale qui sépare des première et seconde positions extrêmes, le siège comprenant une assise (10) avec une armature (11) mobile pour un coussin (12), un dossier (20) avec une armature (21) mobile pour un coussin (22), un piétement (30) destiné à faire reposer le siège sur un plancher, une articulation (40) permettant de changer les positions relatives de ces coussins (12,22) d'assise et de dossier ainsi qu'une timonerie (50) pour asservir les déplacements relatifs de ces coussins (12,22) d'assise et de dossier lors du changement de leurs positions relatives, caractérisé en ce que la timonerie (50) comprend, d'une part, une bielle (51) reliant de manière articulée l'une (111) des extrémités (111,112) de l'armature (11) d'assise au piétement (30) et, d'autre part, un embiellage (52) reliant de manière articulée l'autre (112) des extrémités (111,112) de l'armature (11) d'assise à l'armature (21) de dossier, l'embiellage (52) comprenant une came (521), reliée au piétement (30), coopérant avec une contre-came (522) reliée à l'armature (21) de dossier au moins pendant une partie de la course de ce dossier entre les positions extrêmes du siège, la came (521) comprenant une rampe avec deux tronçons (5211,5212) distincts successifs l'un (5211) procurant un premier mode de fonctionnement et l'autre (5212) de ces tronçons (5211,5212) procurant un second mode de fonctionnement, de manière que, dans un premier mode de fonctionnement, lorsque le dossier (20) passe de sa position normale à la première position extrême l'assise (10) conserve une position au moins localement pratiquement fixe pour que son coussin (12) soit en vis-à-vis du coussin (22) de dossier et que, dans un second mode de fonctionnement, lorsque le dossier (20) passe de sa position normale à la seconde position extrême l'assise (10) change de position pour que son coussin (11) vienne pratiquement en alignement avec le coussin (21) de dossier et, inversement.

2. Siège selon la revendication 1, caractérisé en ce que le piétement (30) comprend au moins un pied (31) avant et au moins un pied arrière (32), et en ce que la bielle (51) reliant l'armature (11) d'assise au piétement (30) est articulée, d'une part, à proximité de l'extrémité (111) avant de l'armature (11) et, d'autre part, à proximité du pied avant (31).

3. Siège selon la revendication 1 ou 2, caractérisé en ce que l'embiellage comprend de plus un bras de commande (523) qui est monté basculant sur un axe (520) et qui est articulé à cette autre (112) des extrémités (111,112) de l'armature (11) d'assise et qui porte un profil (5233) au moins partiellement superposable à la came (521), ainsi qu'une biellette (524) dont l'un (5240) des bouts (5240,5241) est articulé sur l'armature (21) du dossier et dont l'autre (5241) des bouts (5240,5241) porte la contre-came (522) de manière que cette dernière coopère simultanément avec la came (521) et le profil (5233).

4. Siège selon la revendication 3, caractérisé en ce que, dans le premier mode de fonctionnement, le bras de commande (523) est maintenu immobilisé relativement au piétement (30) par la contre-came (522) alors que l'armature (21) de dossier peut se déplacer relativement au bras de commande (523) et en ce que, dans le second mode de fonctionnement, le bras de commande (523) peut se déplacer relativement au piétement (30) sous l'action de la contre-came (522) alors que l'armature (21) de dossier est maintenue immobilisée relativement au bras de commande (523) par la contre-came (522).

5. Siège selon la revendication 3 ou 4, caractérisé en ce que l'un (5211) des tronçons (5211,5212) de la came (521) est rectiligne et l'autre (5212) de ces tronçons (5211,5212) est curviligne, et en ce que le profil (5233) du bras de commande (523) est linéaire.

6. Siège selon la revendication 5, caractérisé en ce que le tronçon curviligne (5212) de la came (521) est centré sur l'axe (520) de basculement du bras de commande (523).

7. Siège selon l'une quelconque des revendications 3 à 6, caractérisé en ce que l'axe (520) de basculement du bras de commande (523) est confondu avec l'axe (400) de l'articulation (40).

8. Siège selon l'une quelconque des revendications 3 à 7, caractérisé en ce que le bras de commande (523) se présente sous la forme générale d'une équerre avec un sommet (5230) qui est articulé sur l'axe (520), avec une branche (5231) qui est articulée à proximité de l'extrémité avant (111) de l'armature (11) d'assise et avec une branche (5231) qui est munie du profil (5233).

9. Siège selon la revendication 8, caractérisé en ce que le profil (5233) est une lumière.

10. Siège selon l'une quelconque des revendications 3 à 9, caractérisé en ce que la came (521) est associée au piétement (30) et se présente à la manière d'une rampe en fente.

11. Siège selon les revendications 9 et 10 prises ensemble, caractérisé en ce que la contre-came (522) se présente à la manière d'un pion avec une partie munie d'une douille à section droite extérieure carrée engagée dans la lumière (5233) du bras de commande et avec une partie munie d'une douille à section droite extérieure circulaire engagée dans la fente en rampe de la came (521).

12. Siège selon l'une quelconque des revendications 3 à 11, caractérisé en ce que l'armature (21) de dossier est munie d'un prolongement (211), et en ce que ce prolongement (211) est relié à l'embiellage (52).

13. Siège selon la revendication 12, caractérisé en ce que le prolongement (211) est articulé sur le bout (5240) de la biellette (524) qui est opposé au bout (5241) de celle-ci qui porte la contre-came (522).

14. Siège selon l'une quelconque des revendications 1 à 13, caractérisé en ce que la rampe de la came (521) comprend une zone de transition (5213) située entre les deux tronçons (5211,5212).

15. Siège selon la revendication 1 ou 2, caractérisé en ce que l'embiellage (52) comprend de plus un bras de commande (523) qui est monté basculant sur un axe (520) et qui est articulé à cette autre (112) des extrémités (111,112) de l'armature (11) d'assise (10), et un verrou (525) fait d'une gâche (5251) qui est associée à l'armature (21) de dossier (20) et d'un pêne (5252) qui est monté pivotant sur le bras de commande (523) et qui porte la contre-came (522).

16. Siège selon la revendication 15, caractérisé en ce que, dans le premier mode de fonctionnement, le bras de commande (523) est maintenu immobilisé relativement au piétement (301) par l'entremise de la came (521) alors que l'armature (21) de dossier peut se déplacer relativement au bras de commande (523) et en ce que, dans le second mode de fonctionnement, le bras de commande (523) peut se déplacer relativement au piétement (30) alors que l'armature (21) de dossier est maintenue immobilisée relativement au bras de commande (523) par le verrou (525).

17. Siège selon la revendication 15 ou 16, caractérisé en ce que le premier tronçon (5211) est en arc de cercle centré sur l'axe (520) de basculement du bras de commande (523).

18. Siège selon l'une quelconque des revendications 15 à 17, caractérisé en ce que la gâche (5251) est une encoche et en ce que le pêne (5252) associé au bras de commande (523) et dont un autre bout est muni d'une dent (5253) destinée à coopérer avec l'encoche.

19. Siège selon l'une quelconque des revendications 15 à 18, caractérisé en ce que le bras de commande (523) se présente sous la forme générale d'une équerre avec un sommet (5230) qui est articulé sur l'axe (520) avec une branche (5231) qui est articulée à proximité de l'extrémité avant (111) de l'armature (11) de l'assise (10), et avec une branche (5231) qui est munie du pêne (5252).

20. Siège selon l'une quelconque des revendications 15 à 19, caractérisé en ce que la gâche (5251) est ménagée dans une plaque en secteur de cercle qui est associée à l'armature (21) du dossier (20), qui est centrée sur l'axe (520) et dont la périphérie porte l'encoche ou cran.

21. Siège selon la revendication 20, caractérisé en ce que la plaque en secteur de cercle est d'un seul tenant avec voire rapportée sur l'armature (21) du dossier (20).

22. Siège selon l'une quelconque des revendications 15 à 21, caractérisé en ce qu'il comporte une butée (526) portée par la gâche (5251) et destinée à coopérer avec le bras de commande (523).

23. Siège selon l'une quelconque des revendications 15 à 22, caractérisé en ce que la contre-came (522) se présente à la manière d'un pion avec une partie munie d'une douille.

24. Application d'un siège selon l'une quelconque des revendications 1 à 23 à un véhicule automobile terrestre de préférence à moteur.

25. Application d'un siège selon la revendication 24 à un véhicule du type dit "monospace".

## Claims

1. Seat, in particular for a vehicle, of the type with multiple positions, with at least one normal position which separates the first and second extreme positions, said seat comprising a seating surface (10) with a moveable frame (11) for a cushion (12), a seat back (20) with a moveable frame (21) for a cushion (22), a base frame (30) to enable the seat to rest on a floor, an articulated joint (40) enabling the relative positions of these cushions (12, 22) of the seating surface and the seat back to be changed, as well as a linkage (50) to actuate the relative displacement movements of these cushions (12, 22) of the seating surface and the seat back during the change of their relative positions, characterised in that, on the one hand, the linkage (50) comprises a bar (51) linking one (111) of the ends (111, 112) of the frame (11) of the seating surface to the base frame (30) in an articulated manner, and on the other hand, comprises a rod arrangement (52) connecting the other (112) of the ends (111, 112) of the frame (11) of the seating surface to the frame (21) of the seat back in an articulated manner, said rod arrangement (52) comprising a cam (521) connecting to the base frame (30) and cooperating with a cam follower (522) connected to the frame (21) of the seat back at least during part of the movement of this seat back between the extreme positions of the seat, said cam (521) comprising a ramp with two distinct successive sections (5211, 5212), one (5211) providing a first mode of operation and the other (5212) of these sections (5211, 5212) providing a second mode of operation, such that, in a first mode of operation when the seat back (20) moves from its normal position to the first extreme position, the seating surface (10) maintains a position which is virtually fixed, at least locally, so that its cushion (12) faces the cushion (22) of the seat back, and that, in a second mode of operation when the seat back (20) moves from its normal position to the second extreme position, the seating surface (10) changes position so that its cushion (11) is virtually in alignment with the cushion (21) of the seat back, and vice versa.

2. Seat according to Claim 1, characterised in that the base frame (30) comprises at least one front foot (31) and at least one rear foot (32), and that the bar (51) connecting the frame (11) of the seating surface to the base frame (30) is articulated firstly close to the front end (111) of the frame (11) and secondly close to the front foot (31).

3. Seat according to Claim 1 or 2, characterised in that the rod arrangement additionally comprises a guide arm (523), which is mounted to swivel on an axis (520) and articulated to this other (112) of the ends (111, 112) of the frame (11) of the seating surface, and which has a profile (5233) which may at least be partially superposed onto the cam (521), as well as a small rod (524), one (5240) of the ends (5240, 5241) of which is articulated onto the frame (21) of the seat back, and the other (5241) of the ends (5240, 5241) bearing the cam follower (522) in such a way that the latter cooperates simultaneously with the cam (521) and the profile (5233)

4. Seat according to Claim 3, characterised in that, in the first mode of operation, the guide arm (523) is held immobilised relative to the base frame (30) by the cam follower (522) while the frame (21) is able to shift relative to the guide arm (523), and that, in the second mode of operation, the guide arm (523) is able to shift relative to the base frame (30) under the action of the cam follower (522) when the frame (21) of the seat back is held immobilised relative to the guide arm (523) by the cam follower (522).

5. Seat according to Claim 3 or 4, characterised in that one (5211) of the sections (5211, 5212) of the cam (521) is rectilinear, and other (5212) of these sections (5211, 5212) is curvilinear, and that the profile (5233) of the guide arm (523) is linear.

6. Seat according to Claim 5, characterised in that the curvilinear section (5212) of the cam (521) is centred on the swivel axis (520) of the guide arm (523).

7. Seat according to any one of Claims 3 to 6, characterised in that the swivel axis (520) of the guide arm (523) coincides with the axis (400) of articulation (40).

8. Seat according to any one of Claims 3 to 7, characterised in that the guide arm (523) is in the general shape of a set square with an apex (5230), which is articulated on the axis (520), with a branch (5231), which is articulated close to the front end (111) of the frame (11) of the seating surface, and with a branch (5231) which is fitted with the profile (5233).

9. Seat according to Claim 8, characterised in that the profile (5233) is an elongated hole.

10. Seat according to any one of Claims 3 to 9, characterised in that the cam (521) is joined to the base frame (30) and has the form of a slotted ramp.

11. Seat according to Claims 9 and 10 taken together, characterised in that the cam follower (522) is provided in the form of a peg with a part fitted with a sleeve with a square external cross-section engaged in the elongated hole (5233) of the guide arm, and with a part fitted with a circular external cross-section engaged in the slot of the ramp of the cam (521).

12. Seat according to any one of Claims 3 to 11, characterised in that the frame (21) of the seat back is fitted with an extension (211), and that this extension (211) is connected to the rod arrangement (52).

13. Seat according to Claim 12, characterised in that the extension (211) is articulated on the end (5240) of the small rod (524) opposite the end (5241) thereof which bears the cam follower (522).

14. Seat according to any one of Claims 1 to 13, characterised in that the ramp of the cam (521) comprises a transition zone (5213) located between the two sections (5211, 5212).

15. Seat according to Claim 1 or 2, characterised in that the rod arrangement (52) additionally comprises a guide arm (523), which is mounted to swivel on an axis (520) and which is articulated to this other (112) of the ends (111, 112) of the frame (11) of the seating surface (10), and a bolt (525) formed by a catch (5251), which is joined to the frame (21) of the seat back (20), and by a locking bar (5252) which is mounted to pivot on the guide arm (523) and which bears the cam follower (522).

16. Seat according to Claim 15, characterised in that, in the first mode of operation, the guide arm (523) is held immobilised relative to the base frame (301) by way of the cam (521) while the frame (21) of the seat back is able to shift relative to the guide arm (523), and that, in the second mode of operation, the guide arm (523) is able to shift relative to the base frame (30) while the frame (21) of the seat back is held immobilised relative to the guide arm (523) by the bolt (525).

17. Seat according to Claim 15 or 16, characterised in that the first section (5211) is in a semi-circle centred on the swivel axis (520) of the guide arm (523).

18. Seat according to any one of Claims 15 to 17, characterised in that the catch (5251) is a notch, and that the locking bar (5252) is joined to the guide arm (523) and its other end is provided with a tooth (5253) in order to cooperate with the notch.

19. Seat according to any one of Claims 15 to 18, characterised in that the guide arm (523) is in the general shape of a set square with an apex (5230), which is articulated on the axis (520), with a branch (5231), which is articulated close to the front end (111) of the frame (11) of the seating surface (10), and with a branch (5231) which is fitted with the locking bar (5252).

20. Seat according to any one of Claims 15 to 19, characterised in that the catch (5251) is arranged in a plate in the shape of a sector of a circle which is joined to the frame (21) of the seat back (20), which is centred on the axis (520) and the periphery of which bears the notch or catch.

21. Seat according to Claim 20, characterised in that the plate in the shape of a sector of a circle is arranged in one piece with attachment to the frame (21) of the seat back (20).

22. Seat according to any one of Claims 15 to 21, characterised in that it comprises an abutment (526) supported by the catch (5251) and intended for cooperation with the guide arm (523).

23. Seat according to any one of Claims 15 to 22, characterised in that the cam follower (522) is in the form of a peg with a part fitted with a sleeve.

24. Application of a seat according to any one of Claims 1 to 23 to a land vehicle, preferably a motor vehicle.

25. Application of a seat according to Claim 24 to a vehicle of the type referred to as a "monospace" vehicle.

## Patentansprüche

1. Mehrfachpositionssitz, insbesondere für ein Fahrzeug, mit zumindest einer Normalposition, die eine erste Extremposition und eine zweite Extremposition voneinander trennt, wobei der Sitz umfaßt einen Sitzteil (10) mit einem bewegbaren Beschlag (11) für ein Polster (12), eine Rückenlehne (20) mit einem bewegbaren Beschlag (21) für ein Polster (22), ein Gestell (30), das zum Zurücklegen des Sitzes gegen einen Boden dient, ein Schwenkgelenk (40), das einen Wechsel der Relativpositionen des Sitzpolsters (12) und des Rückenlehnenpolsters (22) ermöglicht, sowie ein Gestänge (50) zur Steuerung der Relativbewegungen des Sitzpolsters (12) und des Rückenlehnenpolsters (22) bei der Änderung ihrer Relativpositionen,
dadurch **gekennzeichnet**,
daß das Gestänge (50) einerseits einen Lenker (51) umfaßt, der gelenkig eines (111) der beiden Enden (111, 112) des Sitzbeschlags (11) mit dem Gestell (30) verbindet, und andererseits eine Stangenanordnung (52), die gelenkig das andere (112) der Enden (111, 112) des Sitzbeschlags (111) mit dem Rückenlehnenbeschlag (21) verbindet, wobei die Stangenanordnung (52) eine Nockeneinrichtung (521) umfaßt, die mit dem Gestell (30) verbunden ist, und die während mindestens eines Teils des Weges der Rückenlehne zwischen den extremen Positionen des Sitzes mit einer Gegennockeneinrichtung (522) zusammenwirkt, die mit dem Rückenlehnenbeschlag (21) verbunden ist, wobei die Nockeneinrichtung (521) eine Rampe mit zwei unterschiedlichen, aufeinanderfolgenden Teilabschnitten (5211, 5212) umfaßt, von denen einer (5211) eine erste Betriebsweise ermöglicht und der andere (5212) der Teilabschnitte (5211, 5212) eine zweite Betriebsweise ermöglicht, derart, daß in der ersten Betriebsweise der Sitzteil (10) eine Position beibehält, die zumindest lokal praktisch fixiert ist, wenn die Rückenlehne (20) aus ihrer Normalposition in ihre erste Extremposition überführt wird, damit das Sitzpolster (12) gegenüberliegend dem Rückenlehnenpolster (22) angeordnet ist, und derart, daß in der zweiten Betriebsweise der Sitzteil (10) die Position ändert, wenn die Rückenlehne (20) aus ihrer Normalposition in die zweite Extremposition überführt wird, damit das Sitzpolster (11) praktisch in eine fluchtende Anordnung mit dem Rückenlehnenpolster (21) kommt und umgekehrt.

2. Sitz nach Anspruch 1,
dadurch **gekennzeichnet**,
daß das Gestell (30) zumindest einen vorderen Fuß (31) und zumindest einen hinteren Fuß (32) aufweist, und daß der Lenker (51), der den Sitzbeschlag (11) mit dem Gestell (30) verbindet, zum einen in der Nähe des vorderen Endes (111) des Beschlags (11) und zum anderen in der Nähe des vorderen Fußes (31) gelenkig angeordnet ist.

3. Sitz nach Anspruch 1 oder 2,
dadurch **gekennzeichnet**,
daß die Stangenanordnung darüber hinaus einen Steuerhebel (523) umfaßt, der schwenkbar auf einer Achse (520) angeordnet ist und der an dem anderen (112) der Enden (111, 112) des Sitzbeschlags (11) angeordnet ist und eine Führungskontur (5233) aufweist, die zumindest teilweise der Nockeneinrichtung (521) überlagert werden kann, sowie einen Schwingarm (524), dessen eines (5240) der Enden (5240, 5241) an den Rückenlehnenbeschlag (21) angelenkt ist und an dessen anderem (5241) der Enden (5240, 5241) die Gegennockeneinrichtung (522) derart angeordnet ist, daß letztere gleichzeitig mit der Nockeneinrichtung (521) und der Führungskontur (5233) zusammenwirkt.

4. Sitz nach Anspruch 3,
dadurch **gekennzeichnet**,
daß in der ersten Betriebsweise der Steuerhebel (523) durch die Gegennockeneinrichtung (522) relativ zum Gestell (30) unbeweglich gehalten wird, während der Rückenlehnenbeschlag (21) relativ zum Steuerhebel (523) bewegbar ist, und daß in der zweiten Betriebsweise der Steuerhebel (523) sich unter der Einwirkung der Gegennockeneinrichtung (522) relativ zum Gestell (30) verlagern kann, während der Rückenlehnenbeschlag (21) durch die Gegennockeneinrichtung (522) relativ zum Steuerhebel (523) unbeweglich gehalten wird.

5. Sitz nach Anspruch 3 oder 4,
dadurch **gekennzeichnet**,
daß einer (5211) der Teilabschnitte (5211, 5212) der Nockeneinrichtung (521) geradlinig ist und der andere (5212) dieser Teilabschnitte (5211, 5212) gekrümmt ist, und daß die Führungskontur (5233) des Steuerhebels (523) linear ist.

6. Sitz nach Anspruch 5,
dadurch **gekennzeichnet**,
daß der gekrümmte Teilabschnitt (5212) der Nockeneinrichtung (521) auf der Schwenkachse (520) des Steuerhebels (523) zentriert ist.

7. Sitz nach einem beliebigen der Ansprüche 3 bis 6,
dadurch **gekennzeichnet**,
daß die Schwenkachse (520) des Steuerhebels (523) mit der Achse (400) des Gelenks (40) vereinigt ist.

8. Sitz nach einem beliebigen der Ansprüche 3 bis 7,
dadurch **gekennzeichnet**,
daß der Steuerhebel (523) im wesentlichen dreieckförmig ausgebildet ist mit einer Spitze (5230), die gelenkig auf der Achse (520) angeordnet ist, mit einem Schenkel (5231), der nahe dem vorderen Ende (111) des Sitzbeschlags (11) angelenkt ist, und mit einem Schenkel (5231), der mit der Führungskontur (5233) versehen ist.

9. Sitz nach Anspruch 8,
dadurch **gekennzeichnet**,
daß die Führungskontur (5233) als Langloch ausgebildet ist.

10. Sitz nach einem beliebigen der Ansprüche 3 bis 9,
dadurch **gekennzeichnet**,
daß die Nockeneinrichtung (521) dem Gestell (30) zugeordnet und als eine schlitzförmige Rampe ausgebildet ist.

11. Sitz nach den zusammengefaßten Ansprüchen 9 und 10,
dadurch **gekennzeichnet**,
daß die Gegennockeneinrichtung (522) nach Art eines Zapfens ausgebildet ist mit einem Abschnitt, der mit einem Ring mit einem äußeren viereckigen Querschnitt, der sich im Eingriff mit dem Langloch (5233) des Steuerhebels befindet, versehen ist, und mit einem Abschnitt, der mit einem Ring mit einem äußeren kreisförmigen Querschnitt, der sich im Eingriff mit dem Rampenschlitz der Nockeneinrichtung (521) befindet, versehen ist.

12. Sitz nach einem beliebigen der Ansprüche 3 bis 11,
dadurch **gekennzeichnet**,
daß der Rückenlehnenbeschlag (21) mit einer Verlängerung (211) versehen ist, und daß diese Verlängerung (211) mit der Stangenanordnung (52) verbunden ist.

13. Sitz nach Anspruch 12,
dadurch **gekennzeichnet**,
daß die Verlängerung (211) an das Ende (5240) des Schwingarms (524) angelenkt ist, das gegenüberliegend dem Ende (5241) des Schwingarms angeordnet ist, welches die Gegennockeneinrichtung (522) trägt.

14. Sitz nach einem beliebigen der Ansprüche 1 bis 13,
dadurch **gekennzeichnet**,
daß die Rampe der Nockeneinrichtung (521) eine Übergangszone (5213) aufweist, die zwischen den beiden Teilabschnitten (5211, 5212) angeordnet ist.

15. Sitz nach Anspruch 1 oder 2,
dadurch **gekennzeichnet**,
daß die Stangenanordnung (52) darüber hinaus einen Steuerhebel (523) umfaßt, der schwenkbar auf einer Achse (520) angeordnet ist und der an das andere (112) der Enden (111, 112) des Beschlags (11) des Sitzteils (10) angelenkt ist, und eine Verriegelungseinrichtung (525), bestehend aus einer Klinke (5251), die am Beschlag (21) der Rückenlehne (20) angeordnet ist, und aus einem Riegel (5252), der schwenkbar am Steuerhebel (523) befestigt ist und der die Gegennockeneinrichtung (522) trägt.

16. Sitz nach Anspruch 15,
dadurch **gekennzeichnet**,
daß in der ersten Betriebsweise der Steuerhebel (523) mittels der Nockeneinrichtung (521) relativ zum Gestell (301) unbeweglich gehalten wird, während der Rückenlehnenbeschlag (21) sich relativ zum Steuerhebel (523) verlagern kann, und daß in der zweiten Betriebsweise der Steuerhebel (523) sich relativ zum Gestell (30) verlagern kann, während der Rückenlehnenbeschlag (21) durch die Verriegelungseinrichtung (525) relativ zum Steuerhebel (523) unbeweglich gehalten wird.

17. Sitz nach Anspruch 15 oder 16,
dadurch **gekennzeichnet**,
daß der erste Teilabschnitt (5211) als Kreisbogen zentrisch zur Schwenkachse (520) des Steuerhebels (523) angeordnet ist.

18. Sitz nach einem beliebigen der Ansprüche 15 bis 17,
dadurch **gekennzeichnet**,
daß die Klinkeneinrichtung (5251) als Ausklinkung ausgebildet ist, und daß der Riegel (5252) dem Steuerhebel (523) zugeordnet ist und dessen anderes Ende mit einem Zahn (5253) versehen ist, der mit der Ausklinkung zusammenwirkt.

19. Sitz nach einem beliebigen der Ansprüche 15 bis 18,
dadurch **gekennzeichnet**,
daß der Steuerhebel (523) im wesentlichen dreiecksförmig ausgebildet ist mit einer Spitze (5230), die gelenkig auf der Achse (520) angeordnet ist, mit einem Schenkel (5231), der nahe dem vorderen Ende (111) des Beschlags (11) des Sitzteils (10) angelenkt ist, und mit einem Schenkel (5231), der mit dem Riegel (5252) versehen ist.

20. Sitz nach einem beliebigen der Ansprüche 15 bis 19,
dadurch **gekennzeichnet**,
daß die Klinkeneinrichtung (5251) in einer Kreissegmentplatte ausgespart ist, die mit dem Beschlag (21) der Rückenlehne (20) verbunden ist, die zentrisch zur Achse (520) angeordnet ist und deren Peripherie die Ausklinkung oder den Ausschnitt aufweist.

21. Sitz nach Anspruch 20,
dadurch **gekennzeichnet**,
daß die Kreissegmentplatte einstückig ausgebildet ist und vorzugsweise auf den Beschlag (21) der Rückenlehne (20) aufgesetzt ist.

22. Sitz nach einem beliebigen der Ansprüche 15 bis 21,
dadurch **gekennzeichnet**,
daß er einen Anschlag (526) aufweist, der auf der Klinkeneinrichtung (5251) angeordnet ist und mit dem Steuerhebel (523) zusammenwirkt.

23. Sitz nach einem beliebigen der Ansprüche 15 bis 22,
dadurch **gekennzeichnet**,
daß die Gegennockeneinrichtung (522) als ein Zapfen ausgebildet ist, der einen mit einem Ring versehenen Teilabschnitt aufweist.

24. Verwendung eines Sitzes nach einem beliebigen der Ansprüche 1 bis 23 in einem vorzugsweise motorbetriebenen Landfahrzeug.

25. Verwendung eines Sitzes nach Anspruch 24 in einem sogenannten 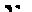 Einraumfahrzeug".
